# EUROPEAN PATENT SPECIFICATION

(11) **EP 0 557 567 B1**
(45) Date of publication and mention of the grant of the patent: **12.06.1996**
(21) Application number: 92103488.0
(22) Date of filing: 28.02.1992
(51) Int. Cl.: B65D 88/68, B65G 65/40, B65G 47/18, B65G 65/42, B65D 90/54, B65D 90/58, B65D 90/60

(54) **Powder constant-volume feeding device**
Pulverzuführeinrichtung mit konstantem Volumen
Dispositif d'alimentation en poudre à volume constant

(43) Date of publication of application: 01.09.1993
(73) Proprietor: Sumitomo Electric Industries, Ltd., Osaka 541 (JP)
(72) Inventor: Nakagawa, Mitsuhiko, Itami Works of Sumitomo, Itami-shi,Hyogo (JP)
(74) Representative: Glawe, Delfs, Moll & Partner

(56) References cited:
- EP-A- 0 349 800
- FR-A- 391 250

## Description

The present invention relates to a powder feeding device for temporarily storing in a hopper a material having a poor flowability such as powder, short fiber and a mixture thereof and feeding the material continuously or intermittently little by little while keeping the homogeneity of the material.

Such a power feeding device is known from EP-A-0 349 800. This document shows a feeding device having a hopper for storing a material having a low flowability and comb-shaped obstruction plates provided at the outlet side of the hopper.

When discharging the material in the hopper, it is necessary to control or restrict its flow rate. One known method therefor is to narrow the outlet opening of the hopper. Due to the orifice effect, this will minimize an error in the feeding rate resulting from a delay in response of a closing mechanism such as a shutter for closing the outlet opening. Another known method is to provide upper and lower shutters near the outlet opening of the hopper so that a weighing space will be formed therebetween. The shutters are adapted to move so that the upper shutters are opened when the lower shutters are closed and then the upper shutters are closed when the lower shutters are opened. Thus a predetermined amount of material is taken out of the hopper.

It is also a common practice to provide an agitator, a vibrator and/or a screw feeder to compensate for the poor flowability of the material. For example, a complicated hopper including an agitator is disclosed in Japanese Unexamined Patent Publication No. 48-72566 and Japanese Examined Patent Publication No. 57-3489.

In DE-A-2931089, it is proposed to solve these problems by use of comb-shaped teeth which are movable between open and closed positions. But while the comb-shaped teeth are moving from its fully closed position to fully open position, the material in the hopper tends to drop gradually through the opening formed by the comb-shaped teeth. When the material drops, the composition of the material tends to change. In other words, the composition of the material taken out of the hopper may not be the same as that of the material in the hopper.

Although there are many other similar devices for discharging a material from the hopper, none of them can control the amount of the material to be taken out with the hopper itself. Generally, the discharge of the material is stopped e.g. by closing the bottom of the hopper when a predetermined weight of material is discharged or when a predetermined time has passed.

If the outlet opening of the hopper is too narrow, a material having a low flowability tends to get stuck in the hopper in a bridge shape (the so-called bridge phenomenon) and thus prevented from dropping through the opening.

Further, depending upon the angle of slope at the outlet as well as the angle of repose of the material, the material might be prohibited from sliding down through the outlet opening.

Various auxiliary devices such as a vibrator and a stirrer are used to solve this problem. When feeding a composite material containing a short fiber such as metallic fiber or soft fiber such as cotton and asbestos, or a plastering material including fibers, it is necessary to provide an auxiliary mechanism having a rather complicated structure. This will increase the cost of the feeding device, lower its reliability and make its maintenance more difficult.

If the powdery material contains fiber or relatively large particles, the shutters are difficult to open and close because a large slide resistance is applied to them.

Moreover, if the material contains granules or fibers having different diameters or different specific gravities, the material tends to separate into a plurality of layers by vibration or agitation. Thus the material taken out of the hopper tends to lose the uniformity or homogeneity.

In order to control the amount of material to be taken out in terms of weight, volume or discharge time, it is necessary to provide a weighing device, a volume level meter or a timer and a mechanism for opening and closing the hopper in respose to the signal from the former or the hopper has to be opened and closed manually by visually checking the amount of material discharged.

Because of these problems, in view of various advantages of a hopper such as easy temporary storage and excellent feed efficiency with low installation cost, it is desired to provide a powder feeding device of a hopper type capable of feeding a mixture which tends to be separated or segregated smoothly and precisely at a desired rate without losing the homogeneity of the material.

It is an object of the present invention to provide a powder feeding device which meets the abovesaid requirements.

In accordance with the present invention, there is provided a material constant-volume feeding device for feeding a material having a low flowability such as metals, organic or inorganic fibers, particles or powders, the device comprising: a hopper having substantially vertical sidewalls, a top inlet opening and a bottom outlet opening for storing the material, the inlet opening having an area which is substantially equal to the area of the outlet opening; comb-shaped obstruction means mounted to be selectively movable between a closed position and an open position for preventing the material from flowing toward the outlet opening of the hopper beyond a particular location due to friction between the material and the obstruction means when the obstruction means is in the closed position, and for allowing the material to flow toward the outlet opening beyond the particular location when the obstruction means is in the open position; driving means for moving the obstruction means between the closed position and the open position; and a collector means below said outlet opening and having a substantially horizontal top surface for receiving the material from the hopper, at least one of the collector means and the hopper being movable vertically relative to the other between a first position in which the material in the hopper is prevented from leaking out of the hopper and a second position in which the collector means and the hopper are spaced apart relative to the first position.

In the abovesaid device, the distance between the adjacent teeth of the obstruction plates is shorter than a predetermined value (which is determined by the type and characteristics of the material) so that the material in the hopper will get stuck between the adjacent teeth owing to the bridge phenomenon and prevented from dropping through the obstruction plates. This will eliminate the necessity of narrowing the outlet opening of the hopper.

The comb-shaped obstruction plates can be smoothly slid through even a material containing fibers without encountering any major resistance as with conventional plate-shaped shutters. Further, the slide resistance when opening and closing the obstruction plates will decrease remarkably by vibrating the obstruction plates or by rotating their teeth.

Other objects of the present invention will become apparent from the following description taken with reference to the accompanying drawings, in which:
Fig. 1A is a perspective view of a first embodiment;
Fig. 1B is a sectional view taken along line I-I of Fig. 1A;
Fig. 2 is a perspective view of the same with the hopper removed;
Figs. 3A - 3D are sectional views of the first embodiment;
Fig. 4 is a sectional view of a second embodiment;
Fig. 5 is a sectional view of a third embodiment; and
Fig. 6 is a sectional view of a fourth embodiment.

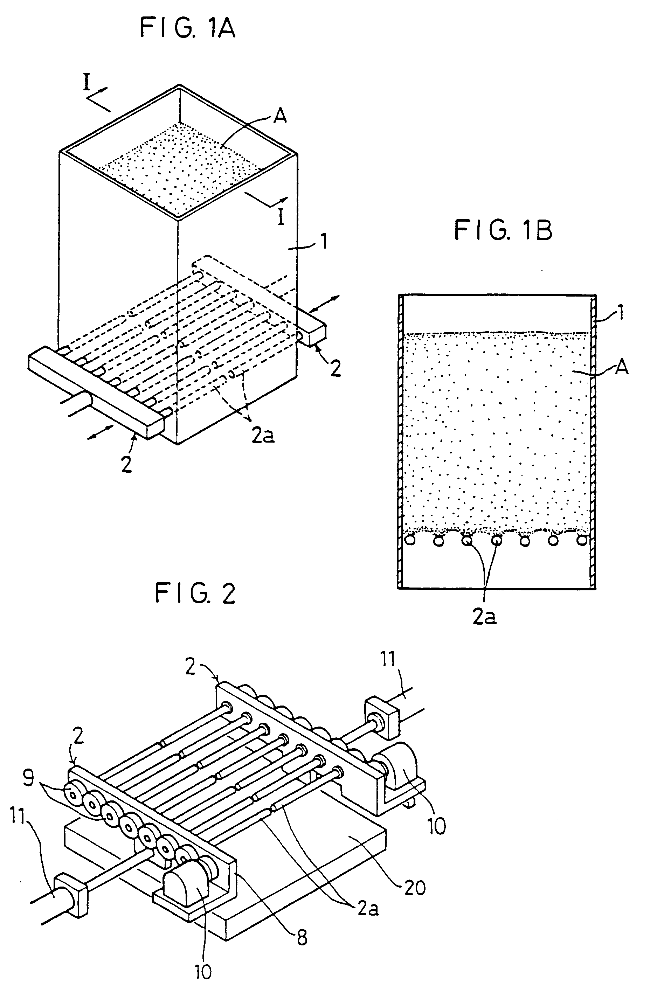

Referring to Fig. 1, this device comprises a hopper 1 and a pair of comb-shaped obstruction plates 2 provided at the bottom of the hopper and each having a plurality of teeth 2a protruding toward each other and adapted to slide toward and away from each other to close and open the bottom of the hopper. When the obstruction plates 2 are in the closed position, a material A having a poor flowability such as powder, short fiber and a mixture thereof is stopped from dropping from the hopper owing to the friction with the obstruction plates 2. When they are in their open position, a predetermined amount of material can be taken out of the hopper.

At the bottom of the hopper 1, a tray 20 is provided. By opening the comb-shaped teeth 2a, the material A inside drops onto the tray. The state of mixture of the material changes little at that time. By closing the teeth 2a, the material is separated into upper and lower parts. Then by lowering the tray 20 or raising the hopper, a predetermined amount of material is left on the tray. The amount of material to be taken out can be adjusted by suitably setting the dimensions of the tray 3 and the comb-shaped teeth.

It is preferable to provide this embodiment with a means for giving micro-vibrations to the obstruction plates 2 and/or a means for revolving their teeth 2a about their own axes for the purposes to be described later.

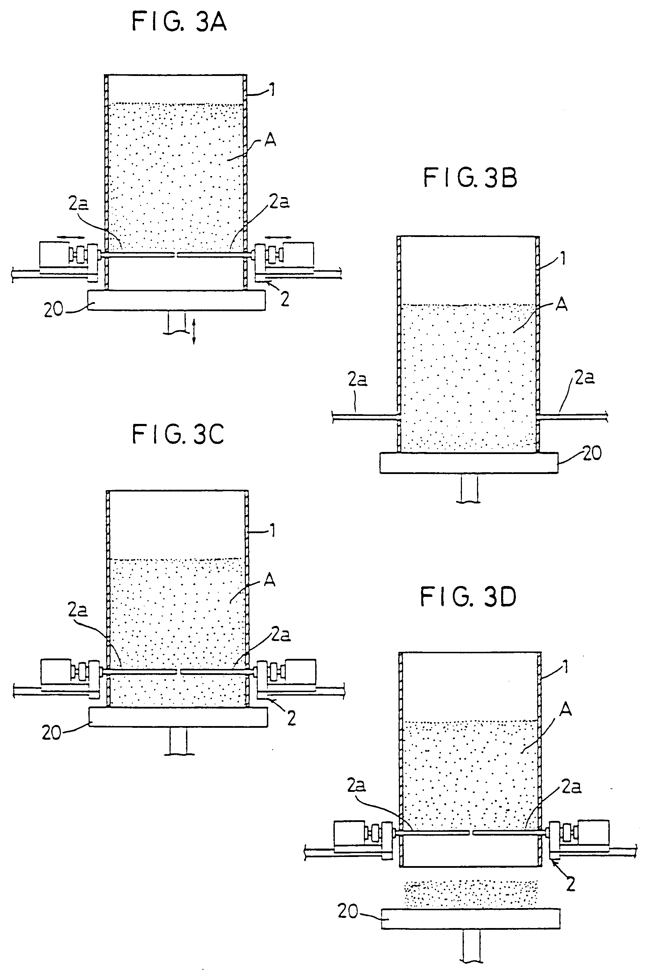

Figs. 2 and 3 show the details of the first embodiment of this invention. The obstruction plates 2 have their teeth 2a rotatably supported by a frame 8. Friction rollers 9 for torque transmission are mounted on the respective teeth 2a at their outer ends. Each roller 9 is in frictional engagement with the adjacent ones so that all the teeth 2a can revolve all at once when a turning torque is applied to one of the rollers 9 from a motor 10. Each tooth 2a has its inner end slightly out of alignment with its outer end so that the inner end will revolve rather shakily. This will facilitate the insertion of the teeth 2a into the material A.

Each tooth 2a may have a diamond-shaped or elliptical section so that the obstruction plates 2 could be opened and closed merely by turning their teeth 2a without the necessity of sliding the plates 2.

Driving means such as cylinders 11 are used to laterally slide the obstruction plates 2.

In the above-described embodiment, the uniformity and homogeneity of the material A taken out of the hopper improve remarkably compared with a prior art device. The terms "uniformity" and "homogeneity" as used herein refer to the fact that the distances and arrangement between the particles of the material do not change even if the material moves.

As shown in Figs. 3A - 3D, a tray 20 having a flat top surface is provided under the hopper 1. The tray 20 is vertically movable. When it is in its uppermost position, its top surface comes into contact with the bottom of the hopper 1, thus preventing the material A from leaking out of the hopper.

The operation of this embodiment will be described with reference to Figs. 3A - 3D. In the state of Fig. 3A, the obstruction plates 2 are closed and the tray 20 is in contact with the bottom of the hopper. The material in the hopper 1 is supported on the obstruction plates 2. When the obstruction plates 2 are slid open, the material will drop onto the tray 20, so that the entire weight of the material bears on the tray 20 (Fig. 3B). When the obstruction plates 2 are slid open, the material will not lose its uniformity and homogeneity because the frictional resistance between the comb-shaped obstruction plates 2 and the material is extremely small compared with the frictional resistance between the shutters and the material. By closing the obstruction plates 2 (Fig. 3C) and lowering the tray 20 or raising the hopper, a predetermined amount of material will be left on the tray 20 (Fig. 3D).

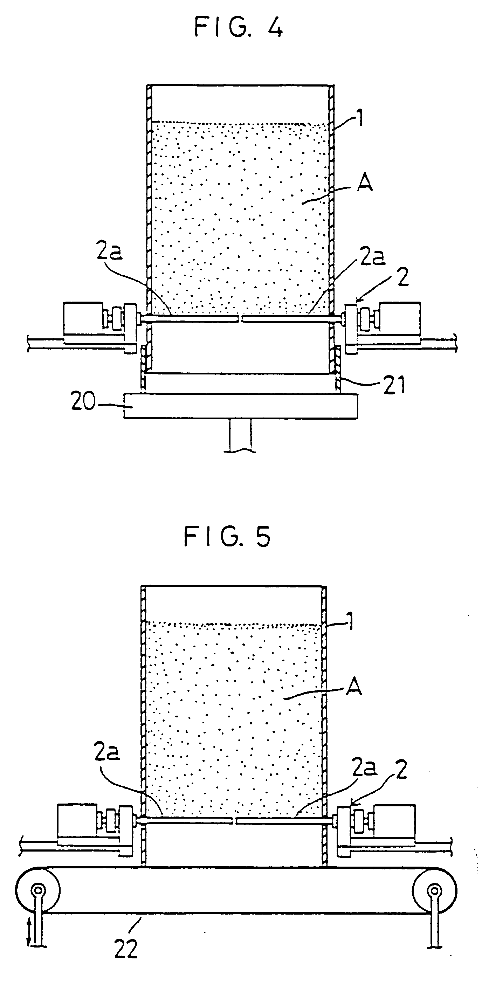

The amount of the material to be taken out on the tray 20 is determined by the distance between the obstruction plates 2 and the top surface of the tray when it is in its uppermost position. In the embodiment shown in Fig. 4, a slide member 21 is secured to the hopper 1 or the tray 20 so as to surround the lower part of hopper 1. With this arrangement, the above-mentioned distance and thus the amount of the material to be taken out can be adjusted freely.

Fig. 5 shows another embodiment in which the tray 20 of Fig. 3A is replaced with a vertically movable belt conveyor 22. Otherwise this embodiment is the same in structure and function as the embodiment of Fig. 3A.

In the above-described embodiments, since there are provided only a single pair of obstruction plates, the pressure acting on the lower part of the material in the hopper tends to increase with increase in the amount of material in the hopper. As a result, the weight per unit area may change, thus breaking the balance of mixture of the substances in the material.

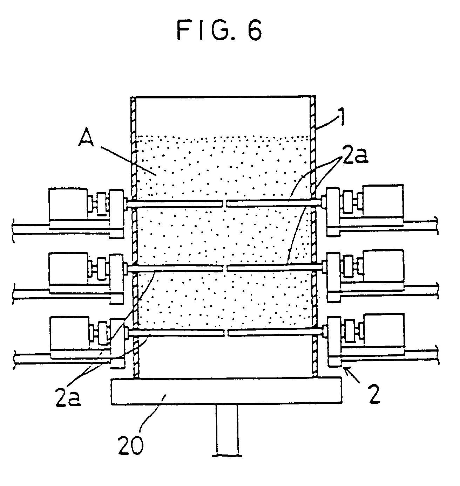

In order to solve this problem, in the embodiment shown in Fig. 6, a plurality of pairs of obstruction plates 2 (three in the embodiment) are provided at equal vertical spacings from each other. By opening and closing the respective pairs alternately, the lowermost pair of obstruction plates receives only the weight of the material present in the space defined by the lowermost pair and the pair directly thereover. Thus the pressure on the lower part of the material can be kept constant irrespective of the amount of the material in the hopper.

In the embodiment, although a pair or pairs of obstruction plates is shown in the drawings, an elongated obstruction plate covering the whole width of the feeding device may be used instead of a pair of short plates about half long.

## Claims

1. A material constant-volume feeding device for feeding a material having a low flowability such as metals, organic or inorganic fibers, particles or powders, said device comprising:
a hopper (1) for storing the material (A), the hopper having substantially vertical sidewalls, a top inlet opening and a bottom outlet opening, the areas of said inlet and outlet openings being substantially equal;
comb-shaped obstruction means (2a) mounted in the hopper (1) at a particular location above said outlet opening and being selectively movable between a closed position and an opened position, the obstruction means in the closed position preventing the material from flowing towards said outlet opening beyond the particular location due to a friction between the material and said obstruction means, and the obstruction means in the opened position allowing the material to flow towards said outlet opening beyond said particular location;
driving means (11) for moving said obstruction means (2a) between the closed position and the opened position; and
a collector means (20,22) having a substantially horizontal top surface located below said outlet opening for receiving the material flowing beyond said particular location to the outlet opening,
the device being characterized in that at least one of said collector means (20,22) and said hopper (1) is movable vertically relative to the other between a first position in which the spacing between the collector means (20,22) and the bottom of the hopper (1) is such that the material in the hopper having flowed beyond the obstruction means (2a) is prevented from leaking out of said hopper (1), and a second position in which the vertical spacing between the collector means (20,22) and the hopper (1) is such that the material can flow out of the outlet opening of the hopper (1).

2. A material feeding device as claimed in claim 1, wherein said comb-shaped obstruction means (2a) are provided in a plurality of pairs so that the respective pairs are located on different horizontal planes in the hopper (2).

3. A material feeding device as claimed in claim 1, wherein said collector means (20, 22) is a tray (20).

4. A material feeding device as claimed in claim 1, wherein said collector means (20, 22) is a conveyor (22).

5. A material feeding device as claimed in claim 2, further comprising means (9, 10) for rotating the respective teeth of said comb-shaped obstruction means about their axes when said obstruction means (2a) are moving from the open position to the closed position, thereby reducing the friction between said obstruction means (2a) and the material (A).

6. A material feeding device as claimed in claim 1, wherein the teeth (2a) of the comb-shaped obstruction means have a diamond-shaped or elliptical section and are movable between the closed position and the opened position by turning each teeth (2a) about its axis.

7. A method for operating a material feeding device as claimed in any of claims 1 to 6, wherein said comb-shaped obstruction means (2a) is moved to the opened position while said hopper (1) and collector means (20,22) are in said first position preventing material from leaking out of the hopper (1) and wherein said comb-shaped obstruction means (2a) is moved into the closed position before said hopper (1) and/or collector means (20,22) is moved into the second position for allowing material to move out of the outlet opening of the hopper (1).

## Patentansprüche

1. Pulverzuführvorrichtung mit konstantem Volumen zum Zuführen eines Materials mit einer geringen Fließfähigkeit wie Metalle, organische oder anorganische Fasern, Teilchen oder Pudern, mit:
einem Bunker (1) zum Speichern des Materials (A), wobei der Bunker im wesentlichen vertikale Seitenwandungen, eine Kopfeinlaßöffnung und eine Bodenauslaßöffnung aufweist, wobei die Flächen der Einlaß- und Auslaßöffnungen im wesentlichen gleich sind;
kammförmigen Hinderungsmitteln (2a), die in dem Bunker (1) an einer bestimmten Stelle oberhalb der Auslaßöffnung befestigt sind und wahlweise bewegbar sind zwischen einer geschlossenen Stellung und einer offenen Stellung, wobei die Hinderungsmittel in der geschlossenen Stellung das Material daran hindern zur Auslaßöffnung zu fließen unter die bestimmte Stelle aufgrund einer Reibung zwischen dem Material und den Hinderungsmitteln, und wobei die Hinderungsmittel in der geöffneten Stellung zulassen, daß das Material zur Auslaßöffnung unterhalb der bestimmten Stelle fließt;
Antriebsmitteln (11) zum Bewegen der Hinderungsmittel (2a) zwischen der geschlossenen Stellung und der offenen Stellung; und
einer Sammelvorrichtung (20, 22), die eine im wesentlichen horizontale Oberfläche aufweist, die unterhalb der Auslaßöffnung angeordnet ist, um das Material, das unter die bestimmte Stelle zur Auslaßöffnung fließt, aufzunehmen, dadurch **gekennzeichnet,** daß mindestens eine von Sammelvorrichtung (20, 22) und Bunker (1) vertikal relativ zueinander bewegbar sind zwischen einer ersten Stellung, in der der Abstand zwischen der Sammelvorrichtung (20, 22) und dem Boden des Bunkers (1) so ist, daß das Material im Bunker, welches unter die Hinderungsmittel (2a) geflossen ist, daran gehindert wird, aus dem Bunker (1) herauszulecken, und einer zweiten Stellung, in welcher der vertikale Abstand zwischen der Sammelvorrichtung (20, 22) so ist, daß das Material aus der Auslaßöffnung des Bunkers (1) herausfließen kann.

2. Pulverzuführeinrichtung nach Anspruch 1, wobei die kammförmigen Hinderungsmittel (2a) in einer Vielzahl von Paaren vorgesehen sind, so daß die jeweiligen Paare in unterschiedlich horizontalen Ebenen des Bunkers (2) angeordnet sind.

3. Pulverzuführvorrichtung nach Anspruch 1, wobei die Sammelvorrichtung (20, 22) ein Trog (20) ist.

4. Pulverzuführvorrichtung nach Anspruch 1, wobei die Sammelvorrichtung (20, 22) ein Förderer (22) ist.

5. Pulverzurührvorrichtung nach Anspruch 2, welche ferner eine Vorrichtung (9, 10) aufweist zum Rotieren der jeweiligen Zähne der kammförmigen Hinderungsmittel um deren Achsen, wenn die Hinderungsmittel (2a) sich von der offenen Stellung zur geschlossenen Stellung bewegen, um dadurch die Reibung zwischen den Hinderungsmitteln (2a) und dem Material (A) zu reduzieren.

6. Pulverzuführvorrichtung nach Anspruch 1, wobei die Zähne (2a) der kammförmigen Hinderungsmittel einen diamantförmigen oder ellyptischen Querschnitt haben und zwischen der geschlossenen Stellung und der offenen Stellung bewegbar sind durch Drehen jedes der Zähne (2a) um seine Achse.

7. Verfahren zum Betreiben einer Materialzuführeinrichtung nach einem der Ansprüche 1 bis 6, wobei die kammförmigen Hinderungsmittel (2a) in die geöffnete Stellung bewegt werden, während der Bunker (1) und die Sammelvorrichtung (20, 22) in der ersten Stellung sind, die das Material daran hindert, aus dem Bunker (1) herauszufließen, und wobei die kammförmigen Hinderungsmittel (2a) in die geschlossene Stellung bewegt werden, bevor der Bunker (1) und/oder die Sammelvorrichtung (20, 22) in die zweite Stellung bewegt werden, um dem Material zu erlauben, sich aus der Auslaßöffnung des Bunkers (1) zu bewegen.

## Revendications

1. Dispositif d'alimentation à volume constant pour alimenter une matière ayant un pouvoir d'écoulement réduit telle que des métaux, des fibres organiques ou minérales, des particules de poudres, ledit dispositif se composant:
d'une trémie (1) pour stocker la matière (A), la trémie comportant des parois latérales sensiblement verticales, une ouverture supérieure d'entrée et une ouverture inférieure de sortie, les aires desdites ouvertures d'entrée et de sortie étant sensiblement égales; de moyens d'obstruction en forme de peigne (2a) montés dans la trémie (1) en un endroit déterminé au-dessus de ladite ouverture de sortie et étant sélectivement mobiles entre une position fermée et une position ouverte, les moyens d'obstruction en position fermée empêchant la matière de s'écouler vers ladite ouverture de sortie au-delà de l'endroit déterminé par suite d'un frottement entre la matière et lesdits moyens d'obstruction et les moyens d'obstruction en position ouverte permettant à la matière de s'écouler vers ladite ouverture de sortie au-delà dudit endroit déterminé;
de moyens d'entraînement (11) pour faire passer lesdits moyens d'obstruction (2a) entre la position fermée et la position ouverte; et de moyens de recueil (20,22) présentant une surface supérieure sensiblement horizontale disposés en dessous de ladite ouverture de sortie pour recevoir la matière s'écoulant au-delà dudit endroit déterminé dans l'ouverture de sortie,
le dispositif étant caractérisé en ce qu'au moins un desdits moyens de recueil (20,22) et ladite trémie (1) sont mobiles verticalement l'un par rapport à l'autre entre une première position dans laquelle l'intervalle d'écartement entre les moyens de recueil (20,22) et le fond de la trémie (1) est tel que la matière se trouvant dans la trémie, s'étant écoulée au-delà des moyens d'obstruction (2a) est empêchée de sortir de ladite trémie (1) et une seconde position dans laquelle l'intervalle d'écartement entre les moyens de recueil (20,22) et la trémie (1) est tel que la matière peut s'écouler par l'ouverture de sortie de la trémie (1).

2. Dispositif d'alimentation en matière selon la revendication 1, dans lequel lesdits moyens d'obstruction en forme de peigne (2a) sont prévus dans une pluralité de paires de telle façon que les paires respectives sont disposées dans des plans horizontaux différents dans la trémie (2).

3. Dispositif d'alimentation en matière selon la revendication 1, dans lequel lesdits moyens de recueil (20,22) sont un plateau (20).

4. Dispositif d'alimentation en matière selon la revendication 1, dans lequel lesdits moyens de recueil (20,22) sont un convoyeur (22).

5. Dispositif d'alimentation en matière selon la revendication 2, comportant en outre des moyens (9, 10) pour faire tourner les dents respectives desdits moyens d'obstruction en forme de peigne autour de leurs axes lorsque lesdits moyens d'obstruction (2a) passent de la position ouverte à la position fermée, réduisant ainsi le frottement entre lesdits moyens d'obstruction (2a) et la matière (A).

6. Dispositif d'alimentation en matière selon la revendication 1, dans lequel les dents (2a) des moyens d'obstruction en forme de peigne ont une section en forme de losange ou elliptique et sont mobiles entre la position fermée et la position ouverte par la rotation de chacune des dents (2a) sur son axe.

7. Méthode pour faire fonctionner le dispositif d'alimentation en matière selon l'une quelconque des revendications 1 à 6, dans laquelle lesdits moyens d'obstruction en forme de peigne (2a) sont amenés dans la position ouverte tandis que ladite trémie (1) et lesdits moyens de recueil (20,22) se trouvent dans ladite première position empêchant la matière de s'écouler de la trémie (1) et dans laquelle lesdits moyens d'obstruction en forme de peigne (2a) sont amenés dans la position fermée avant que ladite trémie (1) et/ou lesdits moyens de recueil (20;22) soient amenés dans la seconde position pour permettre à la matière de s'écouler par l'ouverture de sortie de la trémie (1).
